# EUROPEAN PATENT SPECIFICATION

(11) **EP 2 674 349 B1**
(45) Date of publication and mention of the grant of the patent: **22.07.2015**
(21) Application number: 13170753.1
(22) Date of filing: 06.06.2013
(51) Int. Cl.: B62D 13/02

(54) **Semi-trailer with adjustable steering**
Sattelauflieger mit verstellbarer Lenkung
Semi-remorque avec direction réglable

(30) Priority: 12.06.2012 NL 2008989
(43) Date of publication of application: 18.12.2013
(73) Proprietor: Broshuis B.V., 8263 AD Kampen (NL)
(72) Inventor: Broshuis, Balthasar Johannes Petrus, 1251 LK Laren (NL)
(74) Representative: Van Breda, Jacobus

(56) References cited:
- EP-A1- 0 390 288
- EP-A2- 1 847 448
- DE-A1-102008 009 944
- DE-U- 7 433 770
- DE-U1-202011 003 521

## Description

The invention relates to a semi-trailer comprising at least one steerable axle and a coupling comprising a kingpin for coupling to a tractor by means of a fifth wheel coupling and a steering wedge connected to a steering actuator which is connected to a steering device for steering the at least one steerable axle, wherein steering wedge and steering actuator both are rotatable with respect to the kingpin.

A semi-trailer comprising one or more steerable axles is known. Usually such semi-trailers are coupled to a tractor by means of a so-called fifth wheel coupling. With a fifth wheel coupling for coupling between tractor and semi-trailer, the tractor comprises a usually round coupling plate with a central opening. At the side of the semi-trailer the coupling comprises a so-called kingpin that is received in the opening in the coupling plate of the tractor for establishing the coupling. To guide the kingpin during establishing of the coupling to the opening in the coupling plate of the tractor, the coupling plate comprises at the rear side a wedge shaped recess that ends in the central opening. On the semi-trailer, behind the kingpin, a so-called steering wedge is attached, that fits in the wedge shaped recess of the tractor. During coupling of tractor and semi-trailer, the steering wedge is clamped in the wedge shaped recess. At the semi-trailer the steering wedge is connected to a steering actuator. The steering actuator is connected to the steering system for steering the one or more axles of the semi-trailer. The steering system usually comprises a hydraulic system. With the hydraulic system the majority of components are hydraulic components such as hydraulic cylinders and pistons, hydraulic conduits, valves, etcetera. These hydraulic components are supplemented with mechanical components such as rods and levers. It is also possible that the entire steering consists of mechanical components such as rods, levers, etcetera. Where hereafter hydraulic steering is mentioned, the statements are also applicable to a mixture of hydraulic and mechanical components as well as a steering device entirely consisting of mechanical components. The assembly of steering actuator and steering wedge is rotatable around the kingpin. When the tractor is steering and hence deviates from the straight line in front of the semi-trailer, the steering wedge will move the steering actuator and this movement is being transferred to the hydraulic steering system to steer one or more of the axles of the semi-trailer. Such systems have been functioning satisfactorily in practice during many years.

EP 0 390 288 A1 describes a steering device for a semi-trailer with a fifth wheel coupling and steerable axles. A steering actuator is mounted on a two-way operating, hydraulically or pneumatically controlled movable cylinder. The position of the cylinder determines the distance of the steering actuator to the central axis of the kingpin of the fifth wheel coupling. The steering actuator is slidingly connected to a butterfly shaped mechanical amplifier that in its turn is connected to hydraulic cylinders for steering the axles of the semi-trailer. A sensor determines the angle that occurs during steering of the tractor between the tractor and trailer. This angle is transferred to a computer, that determines for this angle the best steering angle for the axles and by controlling the cylinder adjusts the position of the steering actuator with respect to the kingpin correspondingly. This steering device exhibits several disadvantages. The steering angle is determined by a computer program, and thus it cannot be excluded that an undesirable result is generated and consequently an undesirable and potentially dangerous steering angle is generated. Also electronic disturbances may generate incorrect and potentially dangerous steering angles.

DE 10 2008 0090 A1 describes a trailer with two axles of which the rear axle can be steered depending on the steering angle of the front axle, which in its turn depends on the movement of the pulling vehicle. The relation between steering angle of the rear axle to the steering angle of the front axle is adjustable near the rear axle.

A rather recent development in the area of semi-trailers is a so-called extendable semi-trailer. When an extendable semi-trailer is being extended or is being pushed in, then not only the length of the semi-trailer is changing, but with the length also the amount of steering required. In other words a longer semi-trailer will require a different steering characteristic than a short semi-trailer. This creates the requirement for a semi-trailer with a steering in which the amount of steering can be adjusted in a simple way, for instance when the length of the semi-trailer is being changed, without this requiring constructive changes or adaptations.

The above-mentioned need or requirement is met by a semi-trailer according to claim 1 of the present invention. Such a semi-trailer that comprises one or more steerable axles that are steered in the above-mentioned way, also comprises a lockable adjustment device for adjusting the distance from the steering actuator to the kingpin and the adjustment device comprises means to lock the distance set. By adjustment of this distance the amount of movement of the steering actuator, that means the displacement of the steering actuator with respect to the semi-trailer per unit angular displacement of the tractor with respect to the semi-trailer, is adjusted during use. This results in that with such an angular displacement also the amount of actuation of the hydraulic steering installation that is connected to the steering actuator is being adjusted, which causes that with the same steering angle between tractor and semi-trailer, the axles of the semi-trailer will receive a different steering angle. In this way the amount of steering of the steerable axles of the semi-trailer is adjustable. Further the distance set between steering actuator and kingpin is lockable, so that no undesirable or unwanted steering angles and the dangerous situations connected therewith, can occur. Because the adjustment device is part of the semi-trailer, such an adjustment can take place without a constructive adaptation or change to the semi-trailer being necessary. Thus, when an extendable semi-trailer is extended or pushed in, the semi-trailer according to the invention allows adjustment of the steering behaviour to the changed length of the semi-trailer.

Because during operations considerable forces can be exerted on the steering actuator, it is important that the construction of the steering actuator is robust. Advantageously this requirement is being met with a semi-trailer with an adjustment device that comprises a slide that is movable along a guide, on which the steering actuator is mounted. It is possible to execute a slide movable along a guide in such a way that this can accommodate forces that occur at such a steering, while the adjustability remains intact.

In a preferred embodiment of the adjustment device according to the invention, the adjustment of the slide takes place with a screw spindle. An adjustment that takes place by means of a screw spindle is operated in a simple way because with a screw spindle large adjustment forces can be obtained with a relatively small operating force. Also in a simple way the amount of adjustment can be reached accurately and a locking of the desired and set adjustment can simply be realized with means that are known to a person skilled in the art, so that such means do not need to be described here in further detail.

In another advantageous embodiment of the adjustment device according to the invention, the adjustment of the slide takes place using a hydraulic cylinder. Hereto for example a suitably dimensioned hydraulic cylinder can be used that cooperates with a mechanical locking means that is connected to the cylinder or to the slide, however it is also possible to utilize a hydraulic cylinder of which the piston can be locked in any position, such a hydraulic cylinder is available on the market today.

In a preferred embodiment of the invention the adjustment device comprises an operating member, so that the adjustment can be operated in a simple way. In the embodiment wherein the adjustment takes place using a screw spindle, the operating member can be for example a simple handle or crank for operating the screw spindle or the operating member can comprise an electromotor with for instance a start/stop button to rotate the screw spindle. In the case of the hydraulic cylinder the operating member also advantageously can be embodied by for instance two buttons for increasing respectively decreasing the hydraulic pressure in the cylinder, or a similar simply operable switching mechanism.

Advantageously the adjustment device comprises an indicator that indicates the position of the steering actuator. This indicator can be embodied as a scale that moves with the slide, but also for example be a sensor giving a signal that, possibly after processing, is displayed on a display unit. Also conceivable is a control device coupled to the adjustment device, that together with a input device ensures that the required adjustment is being accomplished.

In many cases the hydraulic steering of the axles will be executed in duplex and therefor the steering actuator will be connected to two hydraulic cylinders of the steering installation. In one embodiment of the invention the steering actuator comprises a steering pivot that is directly coupled to both cylinders.

In another embodiment of the invention the steering actuator comprises a steering pivot that is coupled to both cylinders via a steering amplifier. This steering amplifier can be embodied in different ways and serves the purpose to amplify the movement of the steering actuator. Examples will be described below.

In again another embodiment of the invention the steering actuator comprises two steering pivots each coupled to one of the two cylinders and that can be moved by the adjustment device simultaneously each in a trajectory wherein both trajectories in one position of the steering actuator are perpendicular to the longitudinal axis of the respective hydraulic cylinder. This causes that although the distance of the steering pivots to the kingpin is being changed by adjustment of the steering actuator, in the starting position, that means the position in which there is no angle between the tractor and the semi-trailer, the pistons of both hydraulic cylinders are not subjected to a significant movement.

The invention will now be explained by describing a few examples of non-limiting preferred embodiments of the invention,'with reference to the attached drawing in which:
Fig. 1 is a schematic representation of a combination of a semi-trailer with steerable axles and a tractor;
Fig. 2 is a schematic representation of a part of a fifth wheel coupling on a tractor;
Fig. 3 is a schematic partial representation in side view of an example of an embodiment of a fifth wheel coupling of a semi-trailer with an installation for steering the axles;
Fig. 4 show a part of an embodiment of a coupling at a semi-trailer according to the invention;
Fig. 5 shows the subject of Fig. 4 with a screw spindle;
Fig. 6 shows the subject of Fig. 4 with a hydraulic cylinder;
Fig. 7 shows the subject of Fig. 5 coupled via a first embodiment of a steering amplifier with two hydraulic cylinders that are part of the steering installation for the axles;
Fig. 8 shows a variant of the subject of Fig. 6 coupled via second embodiment of a steering amplifier with two hydraulic cylinders that are part of the steering installation for the axles;
Fig. 9 shows a steering installation with two steering pivots for steering the steerable axles of a semi-trailer; and
Fig. 10 shows an embodiment of an adjustable steering with two steering pivots.

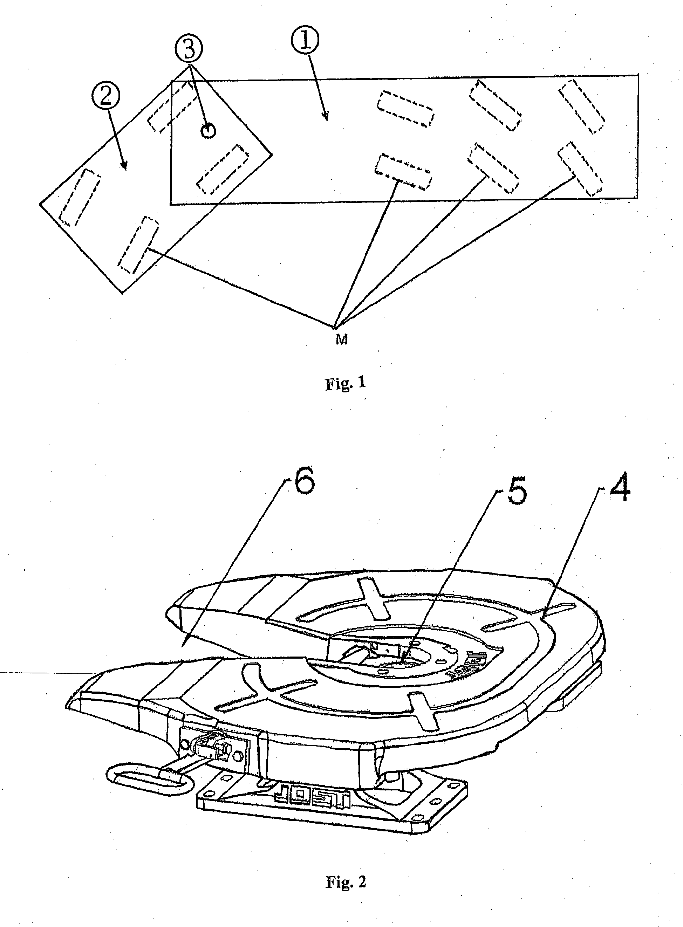

Fig. 1 shows a schematic representation of a combination of a semi-trailer 1 with three steerable axles and a tractor 2. Semi-trailer 1 and tractor 2 are coupled using a fifth wheel coupling 3. In the drawing the principle is shown of a desired steering of the axles of the semi-trailer when the tractor makes a steering movement. In Fig. 1 tractor 2 is steering and the longitudinal axis of the tractor 2 forms an angle with the longitudinal axis of semi-trailer 1. If in such a case the steering of the axles of semi-trailer 1 is arranged in such a way that tractor 2 and semi-trailer 1 can move with wheels that are completely rolling and not partly slipping, the lines perpendicular to the direction of the wheels of the different axles must meet in one point M. When this is not the case for a certain axle, then the wheels of that axle will in addition to rolling also to a certain extent be slipping over the road surface. To reach complete rolling it is directly clear from the figure that the axles of semi-trailer 1 that are further distant to the fifth wheel coupling 3 must obtain a stronger steering than the axles of which the distance to the fifth wheel coupling is smaller. The amount of steering angle is different for each axle, but this steering angle will be determined in a way described below, dependant of the angle that the longitudinal axis of the tractor makes with the longitudinal axis of the semi-trailer. This angle is amplified or attenuated separately but with a fixed factor for each axle to a steering angle specifically for that axle.

With an extendable semi-trailer, when the semi-trailer is being extended and therefor the length of the semi-trailer is increased, also the distance of the axles to the fifth wheel coupling will change. With it also the required steering angle at a certain angle between longitudinal axis of the tractor and the longitudinal axis of the trailer must change, when for example pure rolling of the wheels without slip with the road surface needs to be maintained. Hereto the coupling of semi-trailer 1 with one or more steerable axles according to the invention comprises a device in which the amount of steering of the steered axles of the semi-trailer 1 is adjustable. Examples of an embodiment of a semi-trailer 1 according to the invention equipped with such a steering will be described below. First however a steering according to the state of the art will be described.

Fig. 2 shows a part of a fifth wheel coupling such as normally used on a tractor. The coupling comprises coupling plate 4 that pivotably is mounted on the tractor and which will support a coupling plate of the semi-trailer. Coupling plate 4 comprises a central opening 5 for receiving a kingpin of the semi-trailer to be coupled. Seen in the driving direction behind the central opening 5 coupling plate 4 comprises a recess 6 that widens towards the rear. During coupling of a semi-trailer to the tractor the recess 6 serves to guide the kingpin to the central opening 5. As soon as the kingpin has dropped in central opening 5, the coupling between tractor and trailer has established.

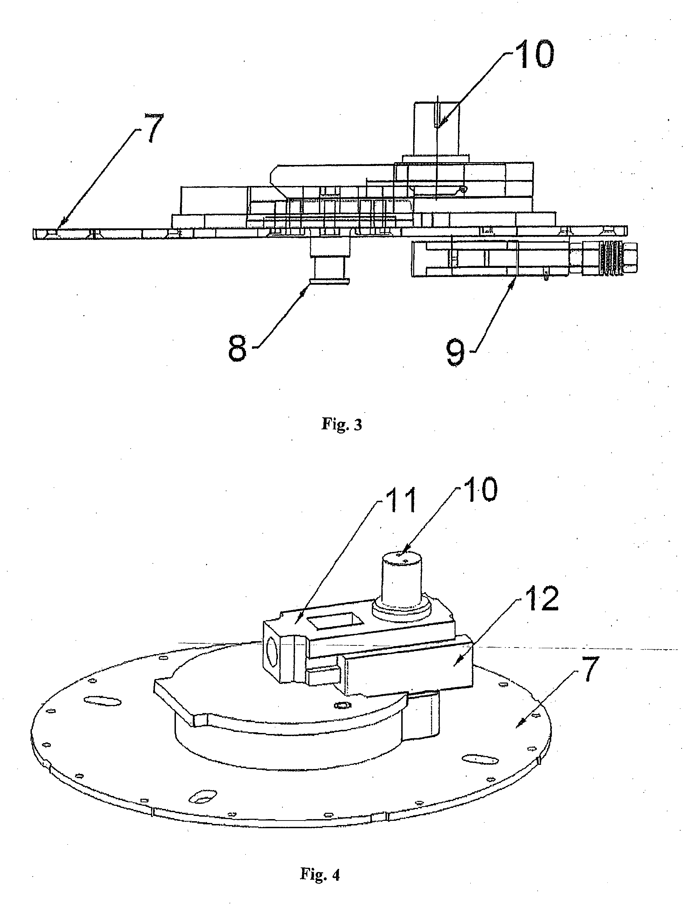

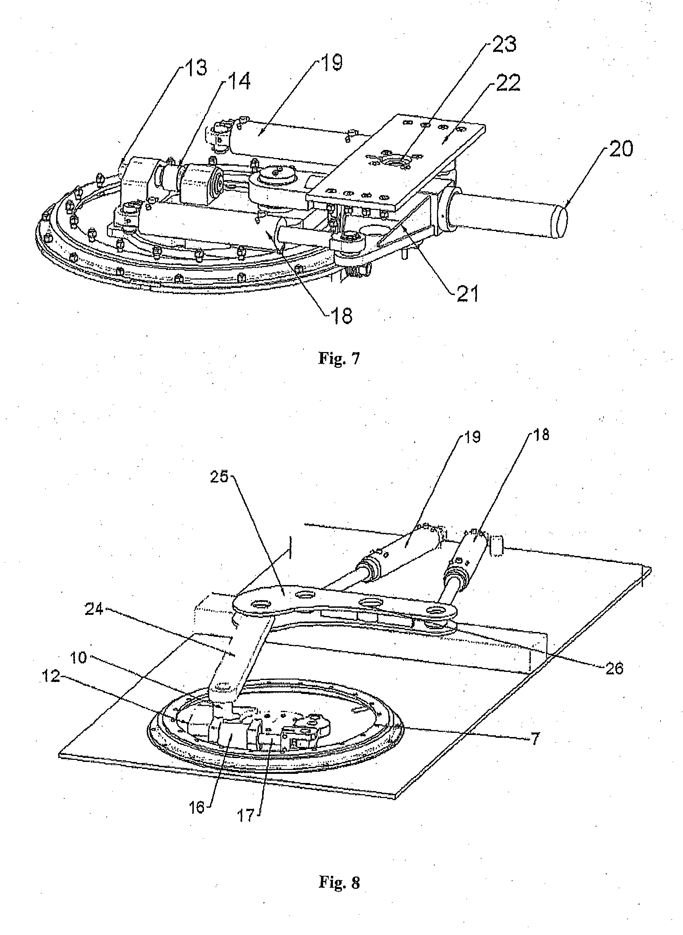

Fig. 3 is a schematical representation in a side view of an example of an embodiment of a fifth wheel coupling at a semi-trailer with a steering installation for the steerable axles. The coupling comprises a coupling plate 7 that during use is supported by coupling plate 4 of the tractor and kingpin 8 that during use falls in opening 5 of the coupling plate of the tractor 2. Kingpin 8 transfers the pulling forces from tractor 2 to semi-trailer 1. The coupling of the semi-trailer 1 further comprises a steering wedge 9, that during use falls in recess 6 of coupling plate 4 of the tractor, and essentially without play. Further the coupling of the semi-trailer comprises a steering actuator in the form of a so-called steering pivot 10, that in this example is located at the upper side of the coupling. Steering wedge 9 and steering pivot 10 are coupled to each other and further coupled in such a way to semi-trailer 1, that they can rotate parallel to coupling plate 7 and with respect to an axis that coincides with the central axis of kingpin 8. This causes that steering wedge 9 is stationary with respect to tractor 2, because steering wedge 9 is clamped in recess 6 of coupling plate 4 of tractor 2, but can rotate with respect to semi-trailer 1. When tractor 2 steers and makes an angle between the longitudinal axis of tractor 2 and the longitudinal axis of semi-trailer 1, this will cause that with respect to semi-trailer 1 the assembly of steering wedge 9 and steering pivot 10 will be subjected to the same angular displacement with respect to semi-trailer 1. In other words the steering of tractor 2 with respect to semi-trailer 1 causes a movement of steering pivot 10. By connecting steering pivot 10 pivotably with the piston rod or piston rods of one or two hydraulic cylinders 18, 19 (see Fig. 7-10), that in turn are part of a hydraulical/mechanical steering system for the steerable axles of semi-trailer 1, a movement of steering pivot 10 at the steering of the tractor 2 causes a movement of the pistons of hydraulic cylinders'18, 19 of the steering system of the steerable axles of semi-trailer 1. This movement will be amplified or attenuated for each of the axles by the steering system in a way known as such, for each axle with a factor that is constant for that axle but may vary between the axles and this movement is transferred into a steering movement of the axle concerned. This establishes a fixed relationship between a steering angle that tractor 2 makes with semi-trailer 1 and a steering angle that is obtained at each of the axles of the semi-trailer 1. In many cases the steering from semi-trailers with steerable axles is arranged in this way.

Fig. 4 shows a part of an embodiment of a coupling of a semi-trailer 1 according to the invention. Fig. 4 shows an essentially round coupling plate 7 and a steering actuator in the form of a steering pivot 10. Kingpin 8 is not visible in Fig. 4 and is located at the lower side of coupling plate 7 and in the centre thereof. Steering pivot 10 is attached to an adjustment device that in this embodiment of the invention has the form of a slide 11 that is movable in a guide 12. Slide 11 is movable in an essentially radial direction with respect to the kingpin and during this movement the distance of steering pivot 10 to the centre of the coupling plate 7 changes and with it the distance to the kingpin 8. In changing this distance also the amount of movement of steering pivot 10 per unit steering angle, that means the angle between the longitudinal axis of the semi-trailer 1 and the longitudinal axis of tractor 2 will change. Because steering pivot 10 is connected to the piston rod or piston rods of one or two hydraulic cylinders that are part of the steering of the axles of semi-trailer 1, also the amount of steering of the steerable axles of semi-trailer 1 will change. Thus an adjustable or adaptable steering is obtained of the steerable axles of semi-trailer 1.

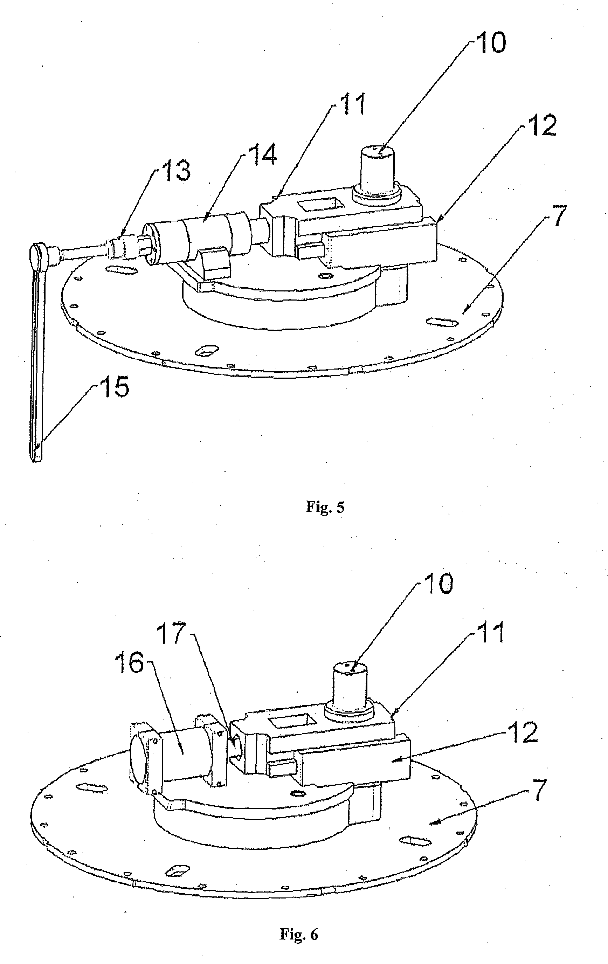

Fig. 5 shows the subject of Fig. 4 wherein the slide 11 is moved by means of a screw spindle 13 that rotatably is mounted in a stationary housing 14. Screw spindle 13 at one end is coupled in an internal thread of slide 11 and at the other end comprises a hexagonal end piece, to which for operation for instance a ratchet wrench 15 can be mounted. By means of ratchet wrench 15 screw spindle 13 can be rotated, so that slide 11 and attached on it steering pivot 10 can be adjusted in guide 12. Thus the distance from steering pivot 10 to kingpin 8 and therefor the amount of steering of the axles of semi-trailer 1 is adjustable. In the usual way the ratchet wrench 15 can be set to clockwise respectively anticlockwise movement so that the movement of the slide 11 with steering pivot 10 in guide 12 can be executed in both directions. The screw spindle 13 comprises a locking device that is not shown, so that screw spindle 13 can be locked in each desired position. For embodiments of such a locking device a person skilled in the art has many known possibilities.

In a preferred embodiment of the adjustment device according to the invention it comprises an indicator that shows the position of the slide with respect to the guide, so that the position set and with that also the amount of steering of the three axles can be determined in an accurate way. This indicator can be executed in any usual way such as they are known to the person skilled in the art. For example it can be formed as a ruler that moves with the slide and a fixed indicator point or has the form of a displacement sensor mounted to the slide where the sensor is coupled to a display unit. Also the screw spindle may comprise a suitable measurement and display device.

In another embodiment of the invention that is not shown, the screw spindle is moved by a commutable electromotor. The movement of slide 11 with steering pivot 10 in guide 12 can then simply be operated by using a switch.

In yet another embodiment screw spindle 13 will be moved using a stepper motor. In that case it is very simple using a keyboard or another suitable input means to indicate the desired final position obtained of slide 11 in guide 12.

Fig. 6 shows the adjustment device 11, 12 of Fig. 4 that is adjustable by means of hydraulic cylinder 16. The piston rod 17 of the hydraulic cylinder is here directly coupled to slide 11. It is remarked that in an advantageous way a hydraulic cylinder can be used that is lockable in each position. Such hydraulic cylinders are nowadays available on the market. For operating cylinder 16 a hydraulic pump can be used that can be operated by means of push buttons, which are not displayed here. Also the system for operating may comprise an indicator for displaying the position of slide 11 in guide 12 or comprise a control mechanism in which piston rod 17 and thus slide 11 are being moved to a position of slide 11 in guide 12 that has been entered by means of a input device and when this position has been reached, the hydraulic cylinder 16 is then locked in this position. Another possibility is a locking mechanism that locks the position of the slide.

In the present practice of semi-trailers with steerable axles, in certain cases notably with semi-trailers of considerable length, a steering comprises so-called steering amplifiers. This means a mechanical device between steering pivot 10 and hydraulic cylinders 18, 19, in which the movement of the steering pivot 10 is being amplified, so that each movement of the steering pivot 10 is being converted in an enlarged movement transferred to the piston rods of the hydraulic cylinders 18, 19.

Fig. 7 shows a coupling of a semi-trailer of Figures 4 and 5 coupled via a first embodiment of a steering amplifier with two hydraulic cylinders 18, 19 of the axle steering. The steering amplifier comprises a connecting rod 20 that is coupled to steering wedge 10 and that passes through a central opening in butterfly shaped part 21 of the steering amplifier. Butterfly shaped 21 is coupled at two ends to respectively hydraulic cylinders 18 and 19. Hydraulic cylinders 18 and 19 are part of the hydraulic steering of the axles of semi-trailer 1. It is common practice that a hydraulic system for steering the axles of a semi-trailer 1 is executed in duplex. Therefor steering pivot 10 is connected with two hydraulic cylinders 18, 19 of the steering of the axles of semi-trailer 1 via a steering amplifier. This steering amplifier is attached to a fixed part of semi-trailer 1 via an attachment plate 22. Attachment plate 22 is connected to the central part of the butterfly shaped part 21 by means of a bearing 23, so that a butterfly 21 can pivot with respect to attachment plate 22. When steering pivot 10, following a steering angle now makes a pivoting movement with respect to the central point of attachment plate 7, the connecting rod 20 slides in the central opening in butterfly shaped part 21 and will cause butterfly shaped part 21 to pivot around bearing 24 with respect to attachment plate 22. This causes the ends of butterfly 22, each of which is connected to one of the hydraulic cylinders 18, 19 of the steering system of the axles of semi-trailer 1, to move one of the piston rods of cylinders 18, 19 inwards and the other of the piston rods of cylinders 18, 19 outwards. As a consequence of the dimensions of butterfly 21 the movement of steering pivot 10 is amplified at the hydraulic cylinders 18, 19 of the steering of the axles of semi-trailer 1. By adjusting the position of the steering pivot 10 with respect to the central point of coupling plate 7, the deflection of steering pivot 10 will change and with it the corresponding deflections of the piston rods of the hydraulic cylinders 18, 19. These will transfer the adjusted steering behaviour to the steerable axles of semi-trailer 1.

Fig. 8 shows a variant of a fixed wheel coupling of a semi-trailer 1 with steerable axles according to Figures 4 and 6, in which the steering pivot is coupled to two hydraulic cylinders of the axle steering via second embodiment of the steering amplifier. The variant consists in that hydraulic cylinder 16 is not directly coupled to slide 11 on which steering pivot 10 can be moved over guide 12, but the piston rod 17 of hydraulic cylinder 16 is coupled with slide 11 via a mechanical amplifier. This has the advantage that a hydraulic cylinder 16 can be used with a shorter stroke of the piston rod 17 to result in the same displacement possibility of slide 11 and with that of steering pivot 10. In the second embodiment of a steering amplifier, this is coupled to the steering pivot 10 by means of a connecting rod 24 that at the other end is coupled to a knee lever 25. Knee lever 25 is pivotably coupled to semi-trailer 1 around pivot axis 26. Piston rods of hydraulic cylinders 18, 19 that are part of the hydraulic steering system for the steerable axles of semi-trailer 1 engage knee lever 25 at both sides of pivot axis 26. When a steering deflection occurs between tractor 2 and semi-trailer 1, and consequently a movement of steering pivot 10 occurs, then this movement is transferred to knee lever 25 via a connecting rod 24 and one of the piston rods of hydraulic cylinders 18, 19 will move outwards with respect to his respective cylinders 18, 19 and the other of the piston rods belonging to cylinders 18, 19 will move inwards. By proper dimensioning of knee lever 25, the movement of steering pivot 10 will be amplified and transferred to the piston rods of respective cylinders 18, 19. When the steering pivot 10 is being moved on slide 11 in guide 12 by means of operating a hydraulic cylinder 16 and piston rod 17, then the movement of steering pivot 10 as a consequence of a steering angle between tractor 2 and semi-trailer 1 will change and this change will proportionally be present in the movement that is transferred by steering amplifier 24, 25, 26 to respective hydraulic cylinders 18, 19 of the steering of axles of semi-trailer 1.

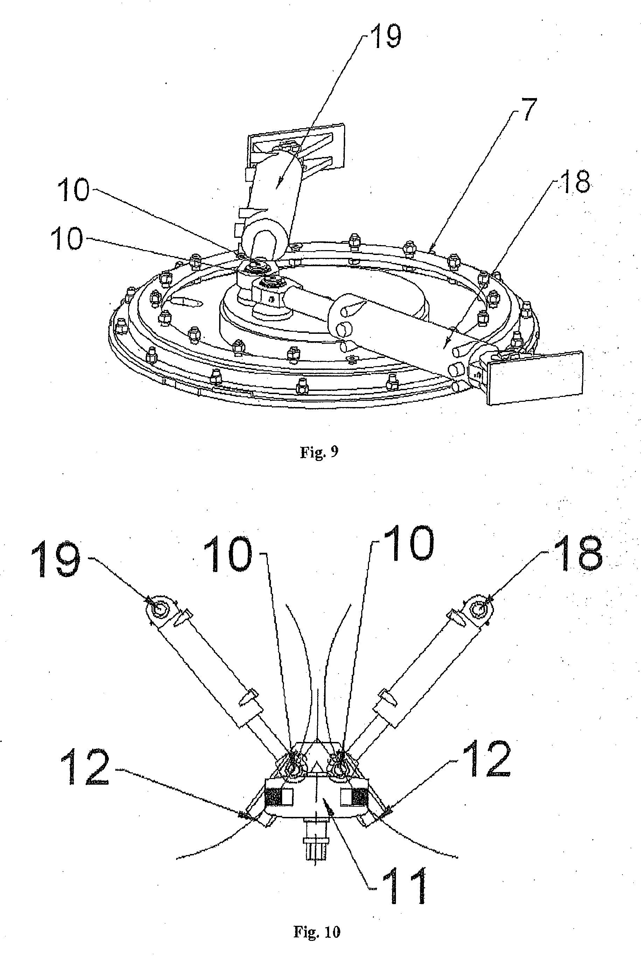

Fig. 9 shows a variant of a coupling of a semi-trailer with steerable axis with two steering pivots, that can be found in practice. On coupling plate 7 in Figure 9 there are two adjacent steering pivots 10, each of which is coupled to one of the two hydraulic cylinders 18, 19 of hydraulic steering of the axles of semi-trailer 1. Also this coupling that can be found in practice, make comprise an adjustable coupling according to the invention. An example of an embodiment thereof is shown in Fig. 10. Fig. 10 shows again coupling plate 7 of a fifth wheel coupling of a semi-trailer 1. In addition two steering pivots 10 are shown, each of which is coupled to one of the two hydraulic cylinders 18, 19 via the respective piston rod. Further visible in Fig. 10 is slide 11 that together with the steering pistons 10 coupled to it are movable along two slides 12, each of which forms a guide 12 for one of the two steering pivots 10. The guides 12 are shaped such and positioned such that they form a path for the movement of the respective steering pivot 10, in which the path is perpendicular or almost perpendicular to the longitudinal direction of the piston rod coupled to it of the hydraulic cylinders 18, 19 concerned. Adjustment of the position of the steering pivot 10 with respect to the centre point of the coupling plate 7 and thus of kingpin 8 at the bottom side of coupling plate 7, causes in itself no or hardly any stroke movement of the piston rods concerned.

It is noted that variants of the embodiments of the present invention, in which the steering device comprises a mixture of hydraulic and mechanical components, and also a steering device that completely comprises mechanical components, amongst which rods or rod systems, also are part of the protection given by the attached claims.

Finally it is noted that to the given examples many variants of embodiments of the invention are possible, all of which are part of the protection provided by the attached claims.

### List of reference numbers

- 1: semi-trailer
- 2: tractor
- 3: fifth wheel coupling
- 4: coupling plate of a tractor
- 5: central opening in 4
- 6: wedge shaped opening in 4
- 7: coupling plate of a semi-trailer
- 8: kingpin
- 9: steering wedge
- 10: steering pivot
- 11: slide
- 12: guide
- 13: screw spindle
- 14: housing of 13
- 15: ratchet wrench
- 16: hydraulic cylinder
- 17: piston rod of 16
- 18: hydraulic cylinder of axle steering
- 19: hydraulic cylinder of axle steering
- 20: connecting rod of first steering amplifier
- 21: butterfly shaped part of first steering amplifier
- 22: attachment plate of first steering amplifier
- 23: bearing between 21 and 22
- 24: connecting rod of second steering amplifier
- 25: knee lever of second steering amplifier
- 26: pivot axis of 25

## Claims

1. Semi-trailer (1) comprising at least one steerable axle, and a coupling comprising a kingpin (8), for coupling a semi-trailer (1) to a tractor (2) by means of a fifth wheel coupling (3), and a steering wedge (9) and attached to it a steering actuator that is connected to a steering device for steering the at least one steerable axle, wherein the steering wedge (9) and the steering actuator both are rotatable around the kingpin (8), wherein the steering actuator is mounted to an adjustment device that is arranged to adjust the distance of the steering actuator to the kingpin (8), **characterized in that** the semitrailer is extendable and the adjustment device is arranged for adjusting the distance from the steering actuator to the kingpin for adjustment of the steering behaviour to the changed length of the semi-trailer, and comprises means to lock the distance set.

2. Semi-trailer (1) according to claim 1, **characterized in that** the adjustment device comprises a slide (11) that is movable along a guide (12), wherein the steering actuator is attached to the slide.

3. Semi-trailer (1) according to claim 1 or 2, **characterized in that** the adjustment of the slide (11) is made using a screw spindle (13).

4. Semi-trailer (1) according to claim 1 or 2, **characterized in that** the adjustment of the slide (11) is made using a hydraulic cylinder (16).

5. Semi-trailer (1) according to one of the claims 1 to 4, **characterized in that** the adjustment device comprises an operating member for causing the displacement of the steering actuator.

6. Semi-trailer (1) according to claim 5, **characterized in that** the adjustment device comprises an indicator indicating a position of the steering actuator.

7. Semi-trailer (1) according to one of the claims 1 to 6, in which the steering actuator is connected to two hydraulic cylinders (18, 19) of the steering device, **characterized in that** the steering actuator comprises a steering pivot (10) that is directly coupled with both cylinders (18, 19).

8. Semi-trailer (1) according to one of the claims 1 to 6, in which the steering actuator is connected to two hydraulic cylinders (18, 19) of the steering device, **characterized in** the steering actuator comprises a steering pivot that is coupled to both cylinders via a steering amplifier.

9. Semi-trailer (1) according to one of the claims 1 to 6, in which the steering actuator is connected with two hydraulic cylinders of the steering device, **characterized in that** the steering actuator comprises two steering pivots (10) each of which are coupled to one of the two cylinders and that can be moved by the adjustment device simultaneously each in a trajectory, wherein both trajectories in one position of the steering actuator are perpendicular to a longitudinal axis of the hydraulic cylinder (18, 19) concerned.

10. Semi-trailer (1) according to one of the claims 1 to 6, in which the steering actuator is connected with two rod systems of the steering device, **characterized in that** the steering actuator comprises a steering pivot that is directly coupled to both rod systems.

11. Semi-trailer (1) according to one of the claims 1 to 6, in which the steering actuator is connected with rod systems of the steering device, **characterized in that** the steering actuator comprises a steering pivot (10) that is coupled to both rod systems via a steering amplifier.

12. Semi-trailer (1) according to one of the claims 1 to 6, in which the steering actuator is connected with two rod systems of the steering device, **characterized in that** the steering actuator comprises two steering pivots (10) that each are coupled to one of the two rod systems and wherein the steering pivots (10) can be moved by the adjustment device simultaneously each in a trajectory, wherein both trajectories in one position of the steering actuator are perpendicular to a longitudinal axis of a rod couple to the steering pivot of the respective rod systems

## Patentansprüche

1. Sattelanhänger (1) mit mindestens einer lenkbaren Achse und einer Kupplung mit einem Königszapfen (8) zum Ankuppeln eines Sattelanhängers (1) an eine Zugmaschine (2) mittels einer Sattelkupplung (3) und einem Lenkkeil (9), wobei daran ein Lenkaktuator, der mit einer Lenkeinrichtung zum Lenken der mindestens einen lenkbaren Achse verbunden ist, befestigt ist, wobei der Lenkkeil (9) und der Lenkaktuator beide drehbar um den Königszapfen sind, wobei der Lenkaktuator an einer Verstelleinrichtung, welche eingerichtet ist, die Entfernung von dem Steueraktuator zu dem Königszapfen (8) einzustellen, **dadurch gekennzeichnet, dass** der Sattelanhänger erweiterbar ist und die Verstelleinrichtung zum Einstellen der Entfernung von dem Steueraktuator zu dem Königszapfen zum Einstellen des Steuerverhaltens zu der veränderten Länge des Sattelanhängers angeordnet ist und Mittel zum Verschließen des eingestellten Abstandes aufweist.

2. Sattelanhänger (1) nach Anspruch 1, **dadurch gekennzeichnet, dass** die Verstelleinrichtung einen Schieber (11) aufweist, der entlang einer Führung (12) beweglich ist, wobei der Lenkaktuator an dem Schieber befestigt ist.

3. Sattelanhänger (1) nach Anspruch 1 oder 2, **dadurch gekennzeichnet, dass** die Verstellung des Schiebers (11) unter Verwendung einer Gewindespindel (13) vorgenommen wird.

4. Sattelanhänger (1) nach Anspruch 1 oder 2, **dadurch gekennzeichnet, dass** die Verstellung des Schiebers (11) unter Verwendung eines Hydraulikzylinders (16) vorgenommen wird.

5. Sattelanhänger (1) nach einem der Ansprüche 1 bis 4, **dadurch gekennzeichnet, dass** die Verstelleinrichtung ein Betätigungselement zum Bewirken der Verschiebung des Lenkatuators aufweist.

6. Sattelanhänger (1) nach Anspruch 5, **dadurch gekennzeichnet, dass** die Verstelleinrichtung ein Anzeigeelement, das die Position des Lenkatuators anzeigt, aufweist.

7. Sattelanhänger (1) nach einem der Ansprüche 1 bis 6, in welchem der Lenkaktuator mit zwei Hydraulikzylindern (18, 19) der Steuereinrichtung verbunden ist, **dadurch gekennzeichnet, dass** der Lenkaktuator zwei Lenkzapfen (10) umfasst, die jeweils mit einem der beiden Zylinder (18, 19) direkt gekoppelt sind.

8. Sattelanhänger (1) nach einem der Ansprüche 1 bis 6, in dem der Lenkaktuator mit zwei Hydraulikzylindern (18, 19) der Steuervorrichtung verbunden ist, **dadurch gekennzeichnet, dass** der Lenkaktuator einen Lenkzapfen, der mit beiden Zylindern über einen Lenkverstärker gekoppelt ist, aufweist.

9. Sattelanhänger (1) nach einem der Ansprüche 1 bis 6, in dem der Lenkaktuator mit zwei Hydraulikzylindern der Lenkeinrichtung verbunden ist, **dadurch gekennzeichnet, dass** der Lenkaktuator zwei Lenkzapfen (10) umfasst, die jeweils mit einem der beiden Zylinder gekoppelt sind und die von der Verstelleinrichtung gleichzeitig jeweils in einer Bahn bewegt werden, wobei die beiden Bahnen in der Stellung des Lenkaktuators senkrecht zu einer Längsachse des Hydraulikzylinders (18, 19) sind.

10. Sattelanhänger (1) nach einem der Ansprüche 1 bis 6, in dem der Lenkaktuator mit zwei Stangensystemen der Lenkeinrichtung verbunden ist, **dadurch gekennzeichnet, dass** der Lenkaktuator einen Lenkzapfen, der direkt mit den beiden Stangensystemen gekoppelt ist, aufweist.

11. Sattelanhänger (1) nach einem der Ansprüche 1 bis 6, wobei der Lenkaktuator mit Stangensystemen der Lenkeinrichtung verbunden ist, **dadurch gekennzeichnet, dass** der Lenkaktuator einen Lenkzapfen (10), der mit beiden Stangensystemen über einen Lenkverstärker gekoppelt ist, aufweist.

12. Sattelanhänger (1) nach einem der Ansprüche 1 bis 6, in dem der Lenkaktuator mit zwei Stangensystemen der Lenkeinrichtung verbunden ist, **dadurch gekennzeichnet, dass** der Lenkaktuator zwei Lenkzapfen (10) umfasst, die jeweils mit einem der beiden Stangensysteme gekoppelt sind, und wobei die Lenkzapfen (10) von der Verstellvorrichtung jeweils simultan in einer Bahn bewegt werden können, wobei die beiden Bahnen an einer Stelle des Lenkaktuators senkrecht zu einer Längsachse einer Stange, die zu dem Lenkzapfen des jeweiligen Stangensystems gekoppelt ist, senkrecht stehen.

## Revendications

1. Semi-remorque (1) comprenant au moins un essieu orientable, et un accouplement qui comprend un pivot d'attelage (8), destiné à accoupler une semi-remorque (1) à un tracteur (2) au moyen d'un accouplement à sellette d'attelage (3), et un coin de direction (9), et fixé à celui-ci, un actionneur de braquage qui est connecté à un dispositif de braquage destiné à orienter le ou les essieux orientables, dans lequel le coin de direction (9) et l'actionneur de braquage peuvent tourner tous les deux autour du pivot d'attelage (8), dans lequel l'actionneur de braquage est monté sur un dispositif de réglage qui est agencé de façon à régler la distance entre l'actionneur de braquage et le pivot d'attelage (8), **caractérisée en ce que** la semi-remorque est extensible et **en ce que** le dispositif de réglage est agencé de façon à régler la distance entre l'actionneur de braquage et le pivot d'attelage de manière à régler le comportement de braquage en fonction de la longueur modifiée de la semi-remorque, et comprend des moyens destinés à bloquer la distance fixée.

2. Semi-remorque (1) selon la revendication 1, **caractérisée en ce que** le dispositif de réglage comprend une glissière (11) qui est mobile le long d'un guide (12), dans laquelle l'actionneur de braquage est fixé sur la glissière.

3. Semi-remorque (1) selon la revendication 1 ou la revendication 2, **caractérisée en ce que** le réglage de la glissière (11) est réalisé à l'aide d'un arbre fileté (13).

4. Semi-remorque (1) selon la revendication 1 ou la revendication 2, **caractérisée en ce que** le réglage de la glissière (11) est réalisé à l'aide d'un vérin hydraulique (16).

5. Semi-remorque (1) selon l'une quelconque des revendications 1 à 4, **caractérisée en ce que** le dispositif de réglage comprend un élément opérationnel destiné à provoquer le déplacement de l'actionneur de braquage.

6. Semi-remorque (1) selon la revendication 5, **caractérisée en ce que** le dispositif de réglage comprend un indicateur qui indique une position de l'actionneur de braquage.

7. Semi-remorque (1) selon l'une quelconque des revendications 1 à 6, dans laquelle l'actionneur de braquage est connecté à deux vérins hydrauliques (18, 19) du dispositif de braquage, **caractérisée en ce que** l'actionneur de braquage comprend un pivot de direction (10) qui est accouplé de manière directe aux deux vérins (18, 19).

8. Semi-remorque (1) selon l'une quelconque des revendications 1 à 6, dans laquelle l'actionneur de braquage est connecté à deux vérins hydrauliques (18, 19) du dispositif de braquage, **caractérisée en ce que** l'actionneur de braquage comprend un pivot de direction qui est accouplé aux deux vérins par l'intermédiaire d'un amplificateur de braquage.

9. Semi-remorque (1) selon l'une quelconque des revendications 1 à 6, dans laquelle l'actionneur de braquage est connecté à deux vérins hydrauliques du dispositif de braquage, **caractérisée en ce que** l'actionneur de braquage comprend deux pivots de direction (10), chacun d'eux étant accouplé à l'un des deux vérins, et **en ce qu'**ils peuvent être déplacés de manière simultanée par le dispositif de réglage, chacun d'eux selon une trajectoire, dans laquelle les deux trajectoires, dans une position de l'actionneur de braquage, sont perpendiculaires à l'axe longitudinal du vérin hydraulique (18, 19) en question.

10. Semi-remorque (1) selon l'une quelconque des revendications 1 à 6, dans laquelle l'actionneur de braquage est connecté à deux systèmes de tiges du dispositif de braquage, **caractérisée en ce que** l'actionneur de braquage comprend un pivot de direction qui est accouplé de manière directe aux deux systèmes de tiges.

11. Semi-remorque (1) selon l'une quelconque des revendications 1 à 6, dans laquelle l'actionneur de braquage est connecté à des systèmes de tiges du dispositif de braquage, **caractérisée en ce que** l'actionneur de braquage comprend un pivot de direction (10) qui est accouplé aux deux systèmes de tiges par l'intermédiaire d'un amplificateur de braquage.

12. Semi-remorque (1) selon l'une quelconque des revendications 1 à 6, dans laquelle l'actionneur de braquage est connecté à deux systèmes de tiges du dispositif de braquage, **caractérisée en ce que** l'actionneur de braquage comprend deux pivots de direction (10), chacun d'eux étant accouplé à l'un des deux systèmes de tiges, et dans laquelle les pivots de direction (10) peuvent être déplacés de manière simultanée par le dispositif de réglage, chacun d'eux selon une trajectoire, dans laquelle les deux trajectoires, dans une position de l'actionneur de braquage, sont perpendiculaires à l'axe longitudinal d'une tige accouplée au pivot de direction des systèmes de tiges respectifs.
